# EUROPÄISCHE PATENTSCHRIFT

(11) **EP 3 752 742 B1**
(45) Veröffentlichungstag und Bekanntmachung des Hinweises auf die Patenterteilung: **04.11.2026**
(21) Anmeldenummer: 19708782.8
(22) Anmeldetag: 13.02.2019
(51) Int. Cl.: F16B 19/12, F16B 25/10

(54) **FÜGEELEMENT**
JOINING ELEMENT
ÉLÉMENT D'ASSEMBLAGE

(30) Priorität: 13.02.2018 DE 102018103205
(43) Veröffentlichungstag der Anmeldung: 23.12.2020
(73) Patentinhaber: EJOT SE & Co. KG, 57319 Bad Berleburg (DE)
(72) Erfinder: MAIWALD, Mario, 99831 Creuzburg (DE); CHRIST, Eberhard, 99897 Tambach-Dietharz (DE)
(74) Vertreter: patcare Patentanwälte Partnerschaft mbB
(86) Internationale Anmeldenummer: PCT/EP2019/053594
(87) Internationale Veröffentlichungsnummer: WO 2019/158608

(56) Entgegenhaltungen:
- EP-A1- 2 455 562
- EP-A1- 2 954 973
- EP-A1- 3 263 920
- WO-A1-90/11458
- DE-A1- 102010 044 887
- DE-A1- 102012 215 901
- DE-A1- 102012 215 905
- DE-A1- 102013 215 941
- DE-A1- 3 043 478
- DE-U1- 202008 015 352

## Beschreibung

Die Erfindung betrifft ein Fügeelement nach dem Oberbegriff des Anspruchs 1.

Die DE 10 2012 215 901 A1 betrifft eine Schraube mit einer Schneidkante an der Spitze, die in einem ersten Bauteil ein Loch zerspanend erzeugt und in einem zweiten darunter liegenden Bauteil fließlochformend. Das Gewinde wird dann in das durch die Spitze beim Durchdringen der unteren Bauteillage erweichte Material eingedrückt. Die DE 20 2008 015352 U1 zeigt ein weiteres Fügeelement aus dem Stand der Technik.

So sind auch sogenannte Reibnägel bekannt, wie beispielswiese aus der DE 10 2006 002 238 A1, der DE 10 2011 109 815 A1 und der DE 10 2007 033 126 A1. Solche Fügeelemente weisen unter dem Kopf einen Klemmbereich zur Klemmung eines oberen Blechteils auf, der von einem Haltebereich gefolgt wird. Der Haltebereich ist eingerichtet, insbesondere durch die Vorsehung von gewindeartigen Strukturen, mit dem unteren Bauteil eine Verbindung einzugehen und so das obere Bauteil am unteren Bauteil festzulegen.

Die DE10 2007 030 806 A1 offenbart ein Fügeelement, das durch einen Bauteilverbund aus wenigstens zwei Bauteillagen getrieben wird, wobei wenigstens eine partielle Reibschweißverbindung zwischen den Bauteillagen und dem Fügeelement entsteht.

Diese Verbindung hat den Nachteil, dass sich gerade für die Verbindung von Bauteillagen eines Bauteilverbunds in Mischbauweise die Reibschweißzone nicht ohne weiteres zuverlässig ausbildet.

Es ist Aufgabe der Erfindung ein Fügeelement anzugeben, das eine verbesserte Verbindung von unterschiedlichen Bauteillagen ermöglicht.

Der Erfindung liegt die Erkenntnis zu Grunde, dass Fremdstoffe aus der oberen und der unteren Bauteillage in die Schweißverbindung zwischen der unteren Bauteillage und dem Fügeelement eingehen können, die die Bildung einer Schweißverbindung negativ beeinträchtigen.

In bekannter Weise umfasst daher ein Fügeelement zur Verbindung mit wenigstens einer Bauteillage einen Kopf, der eine Kopfauflagefläche zur Anlage an einer Bauteillage aufweist und wenigstens ein Antriebsmerkmal, insbesondere in Form eines Außenantriebs, über das das Fügeelement mit einem Formschluss in Rotation versetzt werden kann. Ferner kann am Kopf noch eine Zentrierstruktur zur Zentrierung mit dem Antriebswerkzeug in Form einer Vertiefung oder Erhöhung vorgesehen sein. Ferner umfasst das Fügeelement einen Schaft, der in einer fließlochformenden Spitze endet, wobei die Länge des Schaftes ausgehend von der Kopfauflagefläche bis zum freien Ende des Fügeelements an der Spitze kleiner ist als der fünffache maximale Schaftaußendurchmesser. Ferner weist der Schaft einen Haltebereich zur Verbindung des Fügeelements mit mindestens einer Bauteillage auf.

Am Schaft erstreckt sich anschließend zum Haltebereich ein Abtragbereich in Richtung Spitze, wobei der Abtragbereich ein Abtragprofil aufweist und der Abtragbereich im Abstand von mindestens dem einfachen maximalen Schaftaußendurchmesser von der Kopfauflagefläche beabstandet, beginnt und sich in Richtung Spitze erstreckt.

Erfindungsgemäß weist der Haltebereich eine gewindeartige Haltestruktur in einer ersten Steigungsrichtung auf und das Abtragprofil weist eine Struktur auf, deren Verlauf nicht der ersten Steigungsrichtung entspricht, wobei das Abtragprofil eine Steigung zwischen 0,3 mm und 2 mm aufweist und das Abtragprofil gewindeartig verläuft und eine Steigungsrichtung entgegen der Steigungsrichtung der Haltestruktur aufweist. Ferner weist das Lochformelement in dem Bereich, in dem es in das Abtragprofil übergeht, einen Kerndurchmesser auf, der größer ist als der Kerndurchmesser im Abtragbereich.

Das Fügeelement ist im Haltebereich und Abtragbereich unterschiedlich ausgebildet. Durch die Abtragstrukturen wird beim Durchdringen einer oberen Bauteillage Material bei der Durchdringung der oberen Bauteillage in den Vertiefungen Abtragstrukturen mitgenommen, wodurch das mitgenommene Material aus der Decklage so nicht zwischen das Fügeelement und die untere Bauteillage gedrückt wird und die Bildung einer Reibschweißzone, in ihrer Qualität verbessert wird, wobei die Reibschweißzone partielle Reibschweißverbindungen aufweisen kann, die zwischen dem Fügeelement und der unteren Bauteillage entstehen. Die Qualität der partiellen Reibschweißverbindung wird auch verbessert, indem Material von der unteren Bauteillage, nämlich der Basislage, mitgenommen wird, wodurch eine metallisch reine Kontaktfläche entsteht.

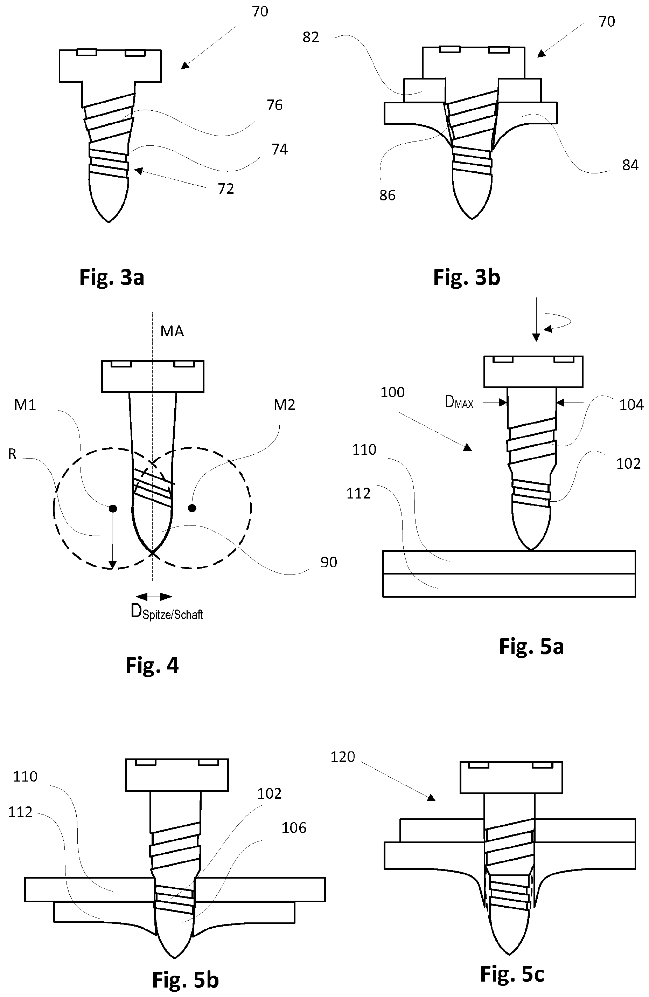

Auch die in dem entsprechenden Verfahren nach Anspruch 15 verwendbaren und in den Figuren gezeigten Fügeelemente werden nachfolgend als "erfindungsgemäß" bezeichnet. Nur Figur 3a zeigt eine Ausführungsform mit den Merkmalen von Anspruch 1.

Das Abtragprofil ist gegenüber dem Schaft insbesondere in einer Negativ- Form abgebildet.

Gemäß einer bevorzugten Ausgestaltung liegt das Abtragprofil in einem Bereich, der in Richtung des Kopfes, mehr als 1,5-mal den maximalen Schaftaußendurchmesser vom freien Ende des Fügeelements in Richtung des Kopfes beabstandet ist.

Das Abtragprofil liegt bevorzugt in einem Schaftbereich dessen Durchmesser wenigstens 80% des maximalen Schaftaußendurchmessers beträgt. Insbesondere ist der Außendurchmesser des Abtragprofils im Abtragbereich kleiner als 90% und liegt insbesondere zwischen 80 % und 90% des maximalen Schaftaußendurchmessers.

In vorteilhafter Weise geht das Abtragprofil in das Lochformelement über, wobei der Durchmesser des Lochformelements im Übergang von dem Lochformelement in den Abtragbereich größer als der Kerndurchmesser im Abtragbereich ist.

Das Verhältnis Kerndurchmesser / Außendurchmesser im Abtragbereich liegt bevorzugt zwischen 85% und 95%.

Bevorzugt ist das Abtragprofil in seinem Außendurchmesser geringer als der kleinste Außendurchmesser im Haltebereich.

Ferner kann vorgesehen sein, dass sich der Außendurchmesser im Übergang vom Abtragbereich zum Haltebereich vergrößert. Dies kann insbesondere bei einem Übergang von einem Abtragbereich mit konstantem Außendurchmesser in einen Haltbereich mit einem in Richtung des Kopfes zunehmenden Außendurchmesser vorliegen.

Die Spitze des Lochformelements kann an ihrem freien Ende einen Durchmesser von maximal 25% des maximalen Schaftdurchmessers aufweisen. Entsprechend kann die Spitze auch durch eine Stirnfläche gebildet sein.

Bevorzugt kann eine solche Stirnfläche im Bereich der Fügeelementachse eine Einbuchtung aufweisen. Dadurch kann bereits Material aus der Decklage in der Einbuchtung aufgenommen werden.

Das Fügeelement kann aus einem Stahl mit einer Zugfestigkeit von mehr als 600MPa, insbesondere mehr als 800 MPa, Nichteisenlegierung, insbesondere Kupferlegierung oder Titanlegierung oder einer Aluminiumlegierung hergestellt sein.

Gemäß einer weiteren vorteilhaften Ausgestaltung weist das Lochformelement eine Länge von höchstens 1,3-mal den maximalen Außendurchmesser auf. Der Übergang von Schaft zum Lochformelement ist entsprechend, vom freien Ende des Fügeelements ausgehend, 1,3-mal den maximalen Außendurchmesser von diesem beabstandet.

Insbesondere verläuft die Spitze im Längsschnitt ogival, so dass diese durch den Schnittpunkt zweier Kreise mit dem Radius R von 0,6 * D_{Spitze/Schaft} <= R <= 2,5 * D_{Spitze/Schaft} gebildet wird. Die Mittelpunkte der sich schneidenden Kreise sind dabei 2 R - D_{Spitze/Schaft} voneinander beabstandet und symmetrisch zur Mittelachse des Fügeelements angeordnet. Diese Form hat ein besonders vorteilhaftes Durchdringungsverhalten mit besonders guter Durchzugsausbildung.

Erfindungsgemäß weist der Haltebereich eine gewindeartige Haltestruktur in einer ersten Steigungsrichtung auf, wobei das Abtragprofil einen Verlauf aufweist, der nicht der ersten Steigungsrichtung entspricht.

Die gewindeartige Haltestruktur, ist insbesondere trapezgewindeartig oder rundgewindeartig gestaltet, wobei das Verhältnis von Kerndurchmesser / Außendurchmesser in einem Bereich von 0,85 bis 0,95 liegt. Der Flankenwinkel einer trapezgewindartigen Haltestruktur liegt insbesondere bei höchstens 30°. Die gewindeartige Haltestruktur kann auch eine unsymmetrisch geteilte Flanke aufweisen.

In den Vertiefungen der gewindeartig gestalteten Haltestruktur kann sich so weiteres Material aus der Decklage absetzen, das sich dann mit dem Material in der Basislage, sofern es sich um dasselbe Material handelt, aufgrund der Reibung stoffschlüssig verbinden kann. Dies ist besonders von Bedeutung, wenn das Material der Decklage dem der Basislage entspricht, aber das Fügeelement aus einem nicht mit den Bauteillagen verschweißbarem Material besteht. Auf diese Weise kann sich das von der Haltestruktur mitgenommene Material aus der Decklage mit dem der Basislage stoffschlüssig verbinden, wonach das Fügeelement mit den Haltestrukturen in Axialrichtung formschlüssig und gegebenenfalls auch zusätzlich partiell stoffschlüssig aufgenommen ist.

Die Abtragstruktur kann orthogonal oder achsparallel zur Fügeelementachse liegen. Eine solche Art der Abtragstruktur ist fertigungstechnisch sehr einfach zu realisieren.

Alternativ kann das Abtragprofil Abtragstrukturen aufweisen die gewindeartig gestaltet sind und eine Steigungsrichtung entgegen der Steigungsrichtung der Haltestruktur aufweisen. So kann das Fügeelement in einer Drehrichtung eingebracht werden, die entgegen der Drehrichtung der Abtragstruktur gerichtet ist, so dass bei Durchdringen der Decklage möglichst viel Material von der Decklage und der Basislage in den Vertiefungen des Abtragprofiles aufgenommen wird, da die gegenläufige Steigungsrichtung wie eine Art Transportschnecke wirkt, wobei ein Gegendruck erzeugt wird, und ein selbständiger Vortrieb des Fügeelements verhindert wird.

Wie allgemein üblich, kann die Steigungsrichtung der Haltestruktur im Haltebereich, analog zu Schrauben, rechtsgängig sein.

Weiter bevorzugt kann erfindungsgemäß vorgesehen sein, dass zwischen dem Kopf und dem Haltebereich ein, insbesondere profilfreier, Klemmbereich vorliegt. Die Fügewirkung des Fügeelements besteht dann darin, dass das Fügeelement stoff- und / oder formschlüssig mit der Basislage verbunden ist und wenigstens eine Decklage zwischen Kopf- und Basislage eingeklemmt werden soll.

Bevorzugt verläuft der Außendurchmesser über den Haltebereich konisch. Dies sorgt beim Verbinden des Fügeelements mit der wenigstens einen Basislage für einen höheren Radialdruck. Dieser begünstigt das Verschweißen von Fügeelement und Basislage und führt auch zu einem besseren Ausfüllen der Zwischenräume zwischen den Haltestrukturen.

Der konische Verlauf der Haltestrukturen wird bevorzugt dadurch erzeugt, dass der Zwischenraum zwischen den Haltestrukturen sich in Richtung des Kopfes vergrößert, wobei der Außendurchmesser entsprechend zunimmt.

Dies ist besonders vorteilhaft, da bei einer umformenden Herstellung des Haltebereichs, zum Beispiel beim Gewindewalzen, aufgrund der Volumenkonstanz das Material mit zunehmender Breite des Zwischenraums nach außen fließt.

Alternativ kann zwischen einem zylindrischen Abtragbereich und einem zylindrischen Haltebereich, der einen größeren Durchmesser als der Abtragbereich aufweist ein, insbesondere konischer, Übergangsbereich vorgesehen sein. Dadurch wird durch die Durchmesserzunahme ein höherer Radialdruck aufgebaut, der sich günstig auf die hergestellte Verbindung auswirkt. Der konische Übergang liegt in einem Winkel von weniger als 10° Spitzenwinkel.

Insbesondere kann der Außendurchmesser über den Abtragbereich zylindrisch verlaufen. Dies führt zu einer gleichmäßigen Lochbildung in der Decklage.

Gemäß einer weiteren bevorzugten Ausgestaltung verläuft der Außendurchmesser des Schafts über den Klemmbereich zylindrisch. Dadurch kann der Kopf seine volle Klemmwirkung auf die Decklage übertragen.

Die Haltestruktur besitzt bevorzugt eine Steigung zwischen 0,3 mm und 2 mm. Dies gilt insbesondere für ein Fügeelement mit einem maximalen Durchmesser von 2,5 mm bis 4 mm.

Das Abtragprofil, wenn gewindeartig gestaltet, besitzt ebenfalls eine Steigung zwischen 0,3 mm und 2 mm.

Bevorzugt erstreckt sich der Haltebereich zwischen dem kopfseitigen Beginn des Abtragprofils und der Kopfauflagefläche, wobei der Haltebereich insbesondere zwischen 2 mm und 6 mm von der Kopfauflagefläche beabstandet ist.

Der Schaft kann einen unrunden Querschnitt, insbesondere einen polygonartigen oder trilobularen Querschnitt, aufweisen, wobei bei einer polygonartigen Gestaltung die Flächen über verrundete Kanten verbunden sind.

Vorzugsweise kann die Spitze eine größere Härte als der Schaft aufweisen. Diese kann insbesondere dadurch erreicht werden, dass das Fügeelement an der Spitze einen zusätzlichen Härteprozess erfährt.

Gemäß einem weiteren Aspekt der Erfindung betrifft diese einen Bauteilverbund umfassend wenigstens zwei übereinanderliegende Bauteillagen in Form einer Basislage und einer darüber liegenden Decklage, die über ein Fügeelement, gemäß einem der vorangehenden Ansprüche, verbunden sind, wobei der Abtragbereich unterhalb der untersten Bauteillage liegt, und abgetragenes Material der Bauteillagen in den Vertiefungen des Abtragprofils aufgenommen ist.

Dadurch ergibt sich der Vorteil, dass das mitgenommene Material in Vertiefungen des Abtragprofils aufgenommen wird und nicht zwischen die Bauteillagen gelangt. Entsprechend werden die Bauteillagen beim Fügevorgang weniger weit auseinander gedrückt. Dies wirkt sich insbesondere bei Bauteilverbunden aus, die mit einer Klebeschicht vorverbunden sind.

Zudem ist, wenn es sich bei der Decklage um Aluminium handelt und bei dem Fügeelement um einen Stahl, dieser mit seinem vorderen dann aus dem Bauteilverbund herausragenden Ende mit einer Aluminiumschicht überzogen, die als Korrosionsschutz wirkt.

Bevorzugt ist in dem Bauteilverbund wenigstens eine partielle Schweißverbindung aufgrund der Reibungsenergie und Druck zwischen der Basislage und dem Fügeelement gebildet.

Insbesondere umfasst die Basislage eine Leichtmetall- oder eine Stahllage, wobei die Decklage eine Bauteillage aus Faserverbund-Kunststoff oder Leichtmetall oder Stahl umfasst. Die Basislage aus Stahl hat bevorzugt eine Zugfestigkeit von mehr als 1000 MPa.

Gemäß einer besonders bevorzugten Ausgestaltung kann sich die Basislage einschließlich eines im Verbindungsprozess erzeugten Durchzugs in der Basislage über den Haltebereich des Fügeelements erstrecken.

Ferner betrifft die Erfindung ein Verfahren zur Herstellung einer erfindungsgemäßen Bauteilverbindung aus wenigstens zwei Bauteillagen über ein erfindungsgemäßes Fügeelement, wobei das Fügelement unter Rotation und Druck die Bauteillagen durchdringt.

Das Verfahren zeichnet sich dadurch aus, dass von dem Fügeelement an der wenigstens einen oberen Bauteillage beim Durchdringen dieser ein Materialabtrag durch das Abtragprofil erfolgt und der Materialabtrag von dem Fügeelement durch die untere Bauteillage hindurch mitgenommen wird.

Zwischen dem Fügeelement und der Basislage wird bevorzugt eine wenigstens partielle stoffschlüssige Verbindung erzeugt. Diese ist besonders gut ausgebildet, wenn die Basislage und das Fügeelement aus Materialien bestehen, die gut miteinander verschweißen.

Insbesondere wird das Fügeelement nach Aufsetzen auf die obere Bauteillage in einer ersten Drehrichtung mit einer Drehzahl von 5000 1/min bis 10.000 1/min gedreht und mit einer axialen Anpresskraft von 2 kN bis 5 kN beaufschlagt und so durch den Bauteilverbund getrieben.

Dadurch wird, wenn das Fügeelement eine gewindeartige Haltestruktur aufweist, diese mit einem Axialvorschub pro Umdrehung eingetrieben, der kleiner ist als der Vorschub, der sich aus der Gewindesteigung ergibt, wobei das Material in die Vertiefungen der Haltestruktur eindringt und sich dann im weiteren Verlauf mit der seitlichen Anlagefläche am gebildeten Durchzug stoffschlüssig verbindet, wodurch das Fügelement in Axialrichtung formschlüssig gehalten wird.

Bevorzugt kann gemäß einem erfindungsgemäßen Verfahren in einem ersten Schritt eine erste Drehzahl und eine erste Anpresskraft verwendet werden, bis der Haltebereich vollständig in die Decklage eingedrungen ist, wobei dann in einem zweiten Schritt eine höhere Drehzahl als die erste Drehzahl und eine geringere Anpresskraft als die erste Anpresskraft verwendet wird.

Insbesondere ist in dem ersten Schritt in einer ersten Drehrichtung eine Drehzahl mit 3000 1/min und 5000 1/min bei einer Anpresskraft von 2 kN bis 3 kN und im zweiten Schritt eine Drehzahl von 7000 1/min bis 10.000 1/min verwendet wird.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1a: eine erste Ausführung eines Fügeelements,
- Fig. 1b: ein Bauteilverbund, der durch eine erste Ausführung eines Fügelements verbunden ist,
- Fig. 2a: eine zweite Ausführung eines Fügeelements,
- Fig. 2b: ein Bauteilverbund, der durch eine zweite Ausführung eines Fügelements verbunden ist,
- Fig. 3a: eine dritte Ausführung eines erfindungsgemäßen Fügeelements,
- Fig. 3b: ein Bauteilverbund, der durch eine dritte Ausführung eines erfindungsgemäßen Fügelements verbunden ist,
- Fig. 4: ein Fügeelement mit einem Lochformelement, das im Längsschnitt eine ogivale Kontur aufweist,
- Fig. 5a: ein Verfahrensabschnitt zur Herstellung eines Bauteilverbunds, der durch eine vierte Ausführung eines erfindungsgemäßen Fügelements verbunden wird,
- Fig. 5b: ein zweiter Verfahrensabschnitt in einem Verfahren gemäß Fig. 5a
- Fig. 5c: ein dritter Verfahrensabschnitt in einem Verfahren gemäß Fig. 5a
- Fig. 5d: ein vierter Verfahrensabschnitt in einem Verfahren gemäß Fig. 5a
- Fig. 6: ein Parameterverlauf des Verfahrensverlaufs für ein Fügeverfahren gemäß Fig. 5a bis 5d,
- Fig. 7a: eine Seitenansicht einer weiteren Ausführung eines erfindungsgemäßen Fügeelements;
- Fig. 7b: eine Detailansicht der Fig. 7a;
- Fig. 8a: eine Schnittansicht eines Fügeelements mit in Richtung des Kopfes zunehmenden Außendurchmessers, und
- Fig 8b: eine Detailansicht eines erfindungsgemäßen Fügeelements gemäß Fig. 8a.

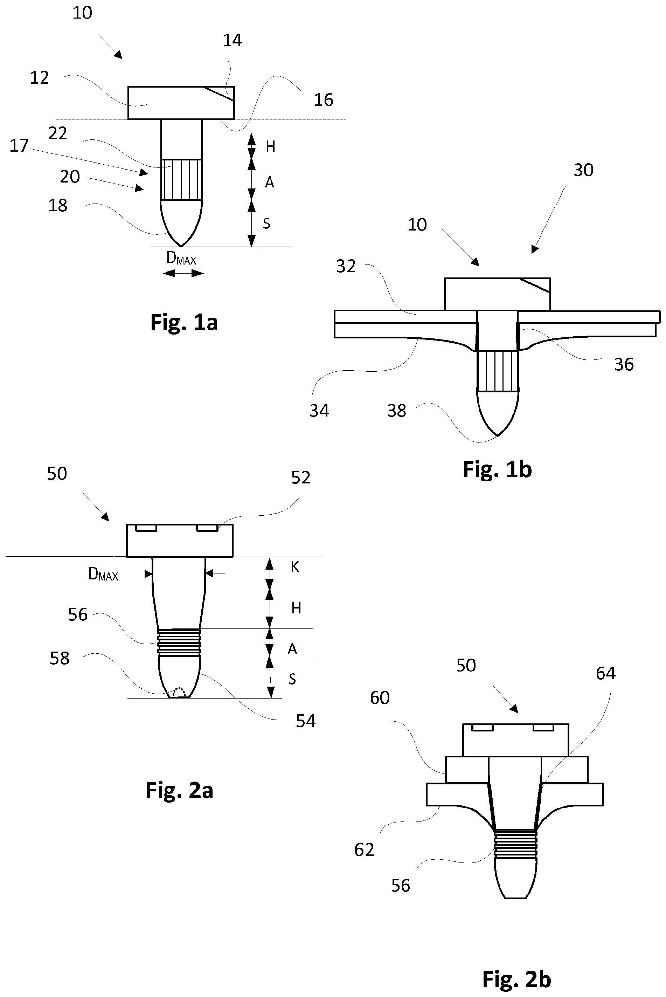

Fig. 1a zeigt eine erste Ausführungsform eines eFügeelements 10. Das Fügeelement 10 umfasst einen Kopf 12, der mit Antriebsmerkmalen 14 eines Außenantriebs versehen ist. Der Kopf 12 weist in Richtung der Spitze 38 des Fügeelements 10 eine Kopfauflagefläche 16 auf.

Diese Ausgestaltung zeigt einen durchgehend zylindrischen Schaft mit dem Außendurchmesser D_{A}. Der Außendurchmesser D_{A} = D ist, bis auf den Spitzenbereich S, über den gesamten Schaft des Fügeelements 10 konstant. Im Abstand von D von der Kopfauflagefläche 16 beginnt sich ein Abtragbereich A mit einem Abtragprofil 20 entlang des Schaftes in Richtung der Spitze 18 zu erstrecken. Das Abtragprofil 20 gemäß Fig. 1a ist in Form von Längsrillen 22 ausgebildet, die parallel zur Mittelachse des Fügeelements verlaufen.

Mit den Längsrillen 22 wird Material von den Bauteillagen, durch die das Fügeelement 10 getrieben wird, abgerieben. Dieses wird dann in den Vertiefungen zwischen den Längsrillen 22 aufgenommen und durch den Bauteilverbund hindurch mitgenommen.

Der Bereich zwischen dem Abtragprofil 20 und dem Kopf ist profillos ausgeführt. Dieser Bereich weist auch den Haltebereich H auf, in dem eine Bauteillage mit dem Fügeelement 10 verbunden werden kann.

Das Fügeelement 10 weist eine Gesamtlänge von der Kopfauflagefläche 16 bis zum freien Ende des Lochformelements 18, nämlich der Spitze 38, eine Länge von ca. 3 x D_{Max} auf. Der Spitzenbereich S erstreckt sich dabei über eine Länge von D, wobei sich auch der Abtragbereich über D erstreckt. Nicht erfindungsgemäß liegt zwischen dem Abtragbereich und der Kopfauflagefläche ein profilfreier Bereich, der den Haltebereich und den Klemmbereich des Fügeelements 10 umfasst. Mit einem solchen Fügeelement können beispielsweise zwei Bauteillagen gefügt werden können, die je eine Blechdicke von D/3 besitzen.

Fig. 1b zeigt dazu einen Bauteilverbund 30 umfassend eine Decklage 32 und eine Basislage 34, wobei die Decklage 32 vorzugsweise aus einem weicheren Material als die Basislage 34 besteht. Die beiden Bauteillagen 32, 34 sind durch ein Fügeelement 10 miteinander verbunden, wobei die Basislage über partielle Reibschweißverbindungen mit dem Haltebereich H des Fügeelements verbunden ist, wobei bei der Durchdringung der unteren Bauteillage ein Durchzug - eine hohlkonische Auswölbung der Basislage 34 - gebildet wird. Die Verschweißung findet über diesen Bereich der Basislage 34 statt. Die Decklage 32 ist zwischen der Basislage 34 und dem Kopf 12 eingeklemmt und formschlüssig gehalten. Auf diese Weise können Decklage 32 und Basislage 34 auf einfache Weise miteinander verbunden werden.

Der Materialabtrag nach Herstellung des Vorloches durch das Lochformelements 18, in der Basislage 34 führt dazu, dass die Kontaktstelle zwischen dem Haltebereich des Fügeelements 10 und der Basislage 34 weitgehend metallisch rein ist. Dies führt zur Ausbildung einer Fügezone 36, die durch die Herstellung von qualitativ hochwertigen partiellen Reibschweißverbindungen gebildet ist.

Fig. 2a zeigt eine weitere Ausführung eines Fügeelements 50. Gemäß dieser Ausführung verläuft der Haltebereich H konisch und der Schaft weist ferner in Richtung des Kopfes 52 einen zylindrischen Klemmbereich K auf. Der maximale Außendurchmesser D_{Max} liegt in dieser Ausführung im Klemmbereich vor, wobei dieser wiederum konstant den Durchmesser D aufweist. D liegt bevorzugt zwischen 2,5 mm und 4 mm.

Sowohl der Klemmbereich K als auch der Haltebereich H sind vorliegend nicht erfindungsgemäß profillos ausgeführt. In Richtung eines Lochformelements 54 schließt sich an den konischen Haltebereich H ein zylindrischer Abtragbereich A an, der erfindungsgemäß ein Abtragprofil 56 aufweist. Das Abtragprofil ist in Form von Radialnuten ausgeführt, die umlaufend um den Schaft angeordnet sind.

Bei Durchdringen der Bauteillagen wird Material von den Bauteillagen an den Oberflächen des erzeugten Vorlochs abgetragen. Dies kann der Fall sein, wenn die Bauteillagen nicht vorgelocht sind, oder wenn wenigstens eine Bauteillage mit einem Vorloch versehen ist, der geringer als der Durchmesser des Fügeelements im Abtragbereich ist.

Entgegen der Ausführung des Fügeelements 10 gemäß der Figur 1, weist das Fügeelement 50 einen Haltebereich H in einer konischen profilfreien Grundgestaltung auf. Die konische Gestaltung des Haltebereichs hat den Vorteil, dass die bei der Durchdringung der Basislage eine Erhöhung des Radialdruckes bewirkt wird, wodurch eine Verbesserung der Qualität der partiellen Schweißverbindungen zwischen Fügeelement und Basislage erreicht wird. Der Klemmbereich ist zylindrisch ausgeführt.

Ferner ist das freie Ende des Lochformelements 54 flach gestaltet, wobei in Form einer Strichlinie eine zentrale Einbuchtung 58 angedeutet ist. In diese kann Material beim Durchdringungsvorgang aufgenommen werden.

Fig. 2b zeigt eine Bauteilverbindung aus einer Decklage 60, zum Beispiel aus Aluminium und einer Basislage 62, die bevorzugt aus einem Stahlblech gebildet sein kann, die über ein Fügeelement 50 nach Fig. 2a zusammengehalten werden. Bei Durchdringen der Decklage 60 wird Material, der Decklage 60 in den Radialnuten aufgenommen. Dieses Material gelangt dann nicht mehr zwischen die Decklage 60 und die Basislage 62, sondern wird in den Radialnuten aus dem Bauteilverbund heraustransportiert. Bei Durchdringen der Basislage 62 formt sich durch die fließlochformende Spitze 54 ein Durchzug aus. Das, dem Lochformelement 54 nachfolgende Abtragprofil 56 trägt beim Durchdringen der Basislage 62 an dieser zusätzlich noch eine Oberflächenschicht ab.

Die dann weitgehend metallisch reine Oberfläche an der Innenseite des Lochs in der Basislage und des Durchzugs verbindet sich dann unter Reibung mit dem konischen Haltebereich H mit dem Fügeelement 50 über partielle Reibschweißverbindungen 64. Das Fügeelement wird soweit durch den Bauteilverbund 60, 62 getrieben, dass das Abtragprofil 56 größtenteils aus dem Bauteilverbund 60, 62 herausragt.

Die Decklage wird formschlüssig zwischen der Kopfauflagefläche des Kopfes und der Basislage 62 gehalten. Ist die Decklage 60 insbesondere aus einem Aluminium, so wird das Aluminium von dem Fügeelement 50 im Abtragbereich A mitgenommen und überzieht diesen, wodurch eine Korrosionsschutzschicht hergestellt ist.

Fig. 3a zeigt eine erfindungsgemäße Ausgestaltung eines Fügeelements 70, mit einer Grundform ähnlich dem der Fig. 2b mit einem zylindrischen Abtragbereich einem konischen Haltebereich H und einem zylindrischen Klemmbereich K. Die Ausführung gemäß Fig. 3a weist ein Abtragprofil 72 in Form einer gewindeartig um den Schaft verlaufenden Nut 74 auf. Zudem liegt im Haltebereich H eine ebenfalls gewindeartig verlaufende Haltestruktur 76 vor, wobei die Steigungsrichtung der Haltestruktur zu der im Abtragprofil gegenläufig ist.

Das Fügeelement wird in der Drehrichtung in den Bauteilverbund eingebracht, die der Steigungsrichtung der Haltestruktur 76 entspricht. Dies führt dazu, dass das Abtragprofil ähnlich einer Förderschnecke wirkt, die während sie durch die Bauteillagen getrieben wird, Material an ihrem Umfang von den Bauteillagen ablöst.

Das Vorsehen einer Haltestruktur 76 im Haltebereich H des Fügeelements 70 hat zur Folge, dass ein verbesserter Zusammenhalt zwischen den Bauteillagen geschaffen werden kann, wenn diese aus einem Material bestehen, das nicht besonders gut zum direkten Verschweißen mit dem Fügeelement 70 geeignet ist.

Dies wird näher in Fig. 3b beschrieben. Gemäß Fig. 3 sind sowohl die Decklage 82 als auch die Basislage 84 aus Aluminium hergestellt. Beim Durchdringen der Decklage 82 aus Aluminium wird in der Haltestruktur 76 Material aus der Decklage 82 aufgenommen und bei weiterem Vortrieb in die Basislage 84 gebracht, wo es aufgrund der Drehung des Fügeelements 70 mit der aus Aluminium bestehenden Basislage 84 verschweißt. Über die Haltestruktur 76, die zwischen dem so verarbeiteten Aluminium liegt, wird das Fügeelement 70 formschlüssig in der Basislage 84 gehalten. Die Decklage 82 ist, wie zuvor beschrieben, zwischen der Basislage 84 und dem Kopf des Fügeelements 70 aufgenommen.

Fig. 4 zeigt ein Lochformelement 90, das im Längsschnitt annähernd ogival verläuft, so dass dieses durch den Schnittpunkt zweier Kreise mit dem Radius R von etwa 1,8 x dem Durchmesser am Übergang von Lochformelement zu Schaft nämlich D_{Spitze/Schaft} gebildet wird. Die Mittelpunkte M1, M2 der Kreise liegen auf einer Linie, die orthogonal zur Mittelachse MA verläuft und sind im Abstand R-D_{Spitze/Schaft} voneinander beabstandet.

Auf diese Weise ist ein Lochformelement 90 geschaffen, das bei hohen Drehzahlen und harten Materialien eine gute fließlochformende Durchdringung bei hoher thermischer Beständigkeit ermöglicht.

Fig. 5a bis Fig. 5d zeigen ein Verfahren zur Herstellung einer Bauteilverbindung 120, umfassend ein erfindungsgemäßes Fügeelement 100. Das Fügeelement 100 weist einen zylindrischen Abtragbereich A mit einem Abtragprofil 102 einen konischen Übergang in den zylindrischen Haltebereich H, der mit einer Haltestruktur 104 versehen ist, und einen profilfreien zylindrischen Klemmbereich K auf. Der maximale Außendurchmesser des Fügeelements 100 bemisst sich im Klemmbereich K. Die Haltestruktur 104 weist eine Steigungsrichtung im Uhrzeigersinn (rechtsgängig), auf wobei das Abtragprofil eine der Haltestruktur 104 gegenläufige Steigungsrichtung aufweist.

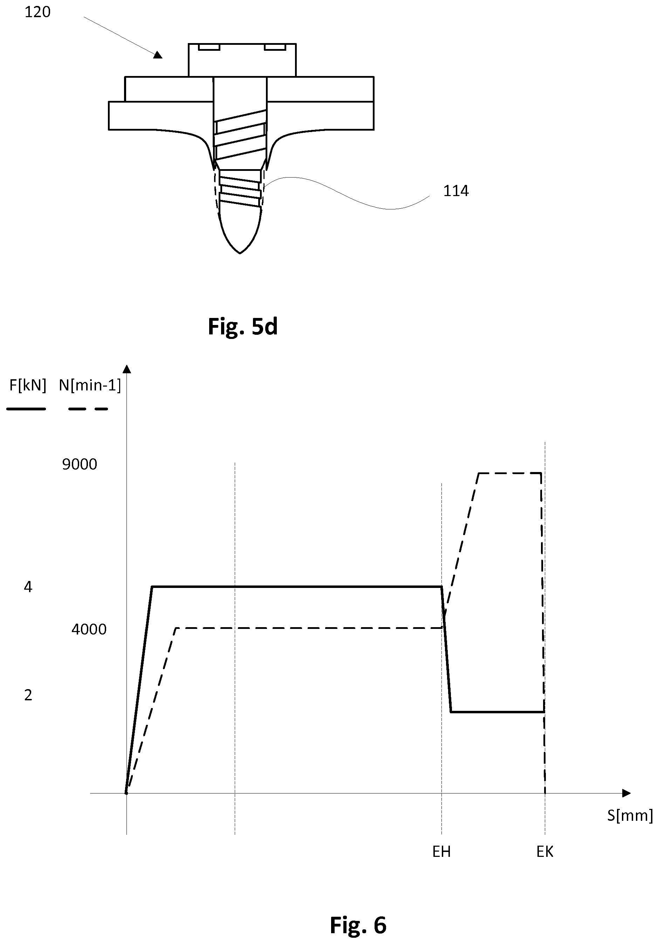

Wie in Fig. 5a angedeutet, wird das Fügeelement 100 in einer Rechtsdrehung mit einer Drehzahl von 2000 1/min - 4000 1/min und einer Axialkraft von 2kN bis 4 kN in die Decklage 110 des Bauteilverbundes 120 eingebracht. Die Decklage 110 besteht bevorzugt aus Aluminium und ist etwa 1,2 mm dick und wird unter Erwärmen durch das im Längsschnitt ogival gestaltete Lochformelement 106 durchdrungen. Dasselbe gilt, wie in Fig.5b gezeigt, für die insbesondere aus Stahl bestehende Basislage 112. Die Basislage ist insbesondere weniger als 1,5 mm dick und weist eine Zugfestigkeit von mehr als 800 MPa auf. Fig. 5 b zeigt das Fügeelement 100 mit einem Abtragprofil 102 im Übergang von der Decklage 110 zur Basislage 112. Das Abtragprofil 102 trägt bei der Durchdringung der Decklage 110 und der Basislage 112 in einer Drehrichtung entgegen seiner Steigungsrichtung Material von diesen ab.

Sobald, wie in Fig. 5c dargestellt, der Haltebereich H in die Decklage 110 eingedrungen ist, wird die Vortriebskraft halbiert und die Drehzahl verdoppelt. Dies führt dazu, dass durch das Abtragprofil 102 ein besserer Abrieb an der Basislage erfolgt und anschließend eine hohe Relativgeschwindigkeit zwischen der Basislage 112 zur Herstellung der partiellen Reibschweißverbindungen vorliegt.

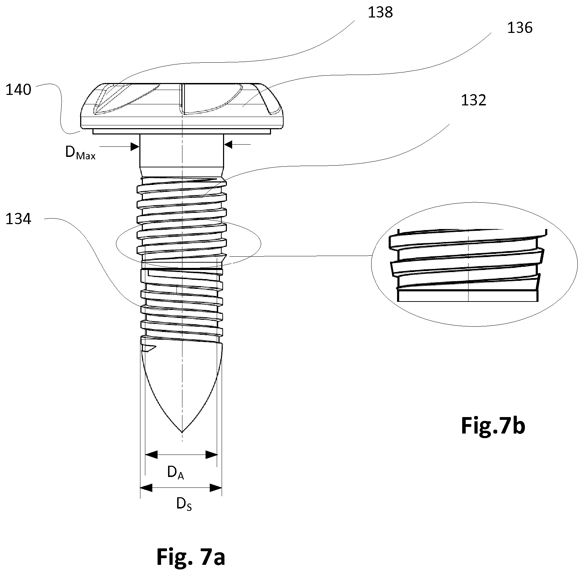

Der Fügeprozess, wie zuvor beschrieben ist in Fig. 7 dargestellt. Der Fügeprozess ist bevorzugt weggesteuert, wobei sich die Bereiche im Wesentlichen durch die Dimensionierung der einzelnen Abschnitte, nämlich Spitze, Abtragbereich, Haltebereich und Klemmbereich ergeben.

Alternativ zur Wegsteuerung kann auch eine Zeitsteuerung oder eine Kombination aus Weg- und Zeitsteuerung erfolgen.

Beim Durchdringen der Bauteillagen 110, 112 wird in dem Abtragprofil 102 Material aus der Decklage 112 als auch aus der Basislage 112 mitgenommen. Dieses Material, insbesondere aus der Decklage 110 wird durch den Bauteilverbund hindurch mitgenommen, was durch eine Ablagerung 114 am Abtragbereich in Fig. 5d angedeutet ist.

Fig. 6 zeigt ein Verlaufsdiagramm der Drehzahl - Strichlinie - mit dem das Fügeelement angetrieben wird und der Axialkraft -Volllinie - abhängig von der Eindringtiefe des Fügeelements 100 ausgehend von der Oberseite der Decklage 110.

Es erfolgt eine kontinuierliche Beschleunigung der Drehzahl bis zu 4000 /min, die dann bei einer Eindringtiefe von 10mm, was in etwa dem Übergang zum Klemmbereich und in etwa der halben Prozesszeit entspricht, kontinuierlich zunehmend bis auf 9.000 /min erhöht wird. Gleichzeitig wird die Axialkraft reduziert, wobei bis zum Ende des Vorgangs eine Axialkraft aufrechterhalten bleibt, so dass ein geringerer Vortrieb bei hoher Drehzahl erfolgt. Dies führt unter anderem dazu, dass kein Gewinde in die untere Bauteillage gefurcht wird, da das Fügeelement sozusagen überdreht wird, da die Drehzahl / Vorschub größer ist als bei der entsprechenden Steigung zur Bildung eines Gewindes zulässig wäre.

Es wird daher eine wenigstens partielle stoffschlüssige Verbindung zwischen dem Fügeelement und der Basislage 112 hergestellt.

Ähnliche Parameter sind für eine Verbindung mit den vorangehend beschriebenen Ausführungen von Fügeelementen heranzuziehen.

Fig. 7a bis Fig. 7b zeigt eine weitere Ausführung eines erfindungsgemäßen Fügeelements. Das in Fig. 7a in Seitenansicht gezeigte Fügeelement 130 weist ein Abtragprofil mit einer Steigung von 0,6 mm und einem Maximaldurchmesser im Klemmbereich K von etwa 3,3 mm auf.

Gut zu erkennen an dieser Darstellung ist, dass der Kerndurchmesser des Lochformelements D_{S} im Übergang zum Abtragbereich größer ist als der Kerndurchmesser im Abtragbereich D_{A}. Wobei der Kerndurchmesser des Lochformelements bei einem profilfreien Lochformelement dem Außendurchmesser entspricht.

Die Haltestruktur 132 weist die gleiche Steigung wie das Abtragprofil auf, ist aber in der dem Abtragprofil 134 entgegengesetzten Richtung orientiert.

Fig. 7b zeigt eine Vergrößerung des Schafts des Fügeelements 130 im Übergang vom Abtragbereich A zum Haltebereich H. An der vergrößerten Detailansicht ist deutlich der konische Verlauf zur Außendurchmesservergrößerung erkennbar.

Ferner wird deutlich, dass die Länge des Schafts des Fügeelements ab der Kopfauflagefläche 140 gemessen wird. Ferner ist zu erkennen, dass das Fügeelement 130 in Drehung versetzt wird, indem Antriebsfläche 138 für einen Außenantrieb am Kopf des Fügeelements 130 vorgesehen sind. Die Länge des Schaftes beträgt etwa 3,6-mal den maximalen Durchmesser D_{Max}.

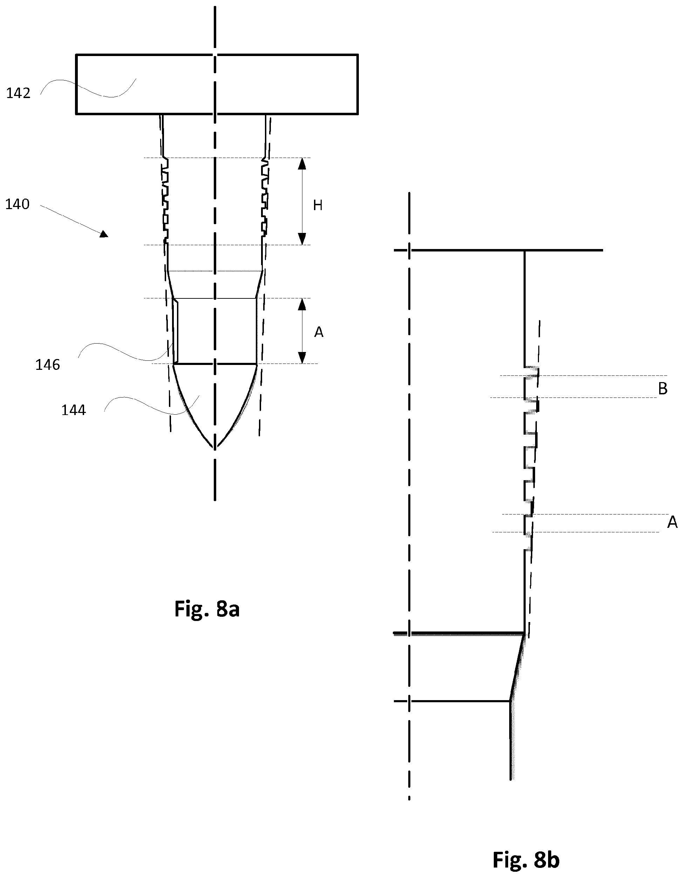

Fig. 8a zeigt eine schematische Schnittansicht, eines erfindungsgemäßen Fügeelements 140, bei dem der Außendurchmesser des Fügeelements 140 in Richtung des Kopfes 142 zunimmt. Im Haltebereich H sind gewindeartige Haltestrukturen vorgesehen, wobei sich der Abstand A, B zwischen den gewindeartigen Haltestrukturen erhöht in Richtung des Kopfes. Die axiale Breite der Haltestrukturen nimmt dabei in Richtung des Kopfes ab, insbesondere werden die Enden der gewindeartigen Haltestruktur in Richtung des Kopfes zunehmend spitzer und dringen dadurch besser in die Basislage ein. Durch das zunehmend spitzere Ende wird ein schnellerer Wärmeeintrag in die Haltestruktur begünstigt, was sich positiv auf die Verbindungsfestigkeit auswirkt. Die Abtragstrukturen 146, die im Abtragsbereich A in Form von Längsnuten angedeutet sind, können aber auch, wie vorangehend beschrieben, gewindeartig ausgebildet sein. Die Spitze 144 kann gegenüber dem Schaft eine größere Härte aufweisen.

Durch den zunehmenden Außendurchmesser werden die Halteeigenschaften verbessert.

Im Detail der Fig. 8b ist die Zunahme des Außendurchmessers in Richtung des Kopfes dargestellt, wobei die Umhüllende im Haltebereich des Fügeelements angedeutet ist. Ferner ist im Detail zu erkennen, dass der Abstand der Haltestrukturen, von einem, dem Abtragbereich zugewandten Ende des Haltebereichs einen Abstand A aufweisen, der geringer als der Abstand B der Haltestrukturen am gegenüberliegenden Ende des Haltebereichs H ist.

## Patentansprüche

1. Fügeelement (10, 50, 70, 100, 130) zur Verbindung mit wenigstens einer Bauteillage (34, 62, 84, 112) umfassend einen Kopf (12, 52), aufweisend eine Kopfauflagefläche (16, 140) zur Anlage an einer Bauteillage und wenigstens ein Antriebsmerkmal (14), über das das Fügeelement (10, 50, 70, 100, 130) in Rotation versetzt werden kann, sowie einen Schaft (17), der über ein Lochformelement (18, 54, 90, 106) in einer Spitze (38,) endet, wobei die Länge des Schaftes (17) ausgehend von der Kopfauflagefläche (16) bis zur Spitze (38) kleiner ist als der fünffache maximale Schaftaußendurchmesser (D_{Max}), wobei der Schaft (17) einen Haltebereich (H) zur Verbindung mit der Bauteillage aufweist, wobei sich am Schaft (17) anschließend zum Haltebereich (H) in Richtung Spitze (38) ein Abtragbereich (A), der ein Abtragprofil (20, 56, 72, 102, 134) aufweist, erstreckt, und dass der Abtragbereich (A) im Abstand von mindestens dem einfachen maximalen Schaftaußendurchmesser (D_{Max}) von der Kopfauflagefläche (16, 140) beabstandet beginnt, wobei der Haltebereich (H) eine gewindeartige Haltestruktur (76, 104, 132) in einer ersten Steigungsrichtung aufweist **dadurch gekennzeichnet, dass** das Abtragprofil (74,102, 132) gewindeartig verläuft und eine Steigungsrichtung entgegen der Steigungsrichtung der Haltestruktur (76, 104, 134) aufweist und eine Steigung zwischen 0,3 mm und 2 mm aufweist, wobei das Lochformelement (18, 54, 90, 106) in dem Bereich, in dem es in das Abtragprofil (20, 56, 72, 102, 134) übergeht, einen Kerndurchmesser aufweist, der größer ist als der Kerndurchmesser im Abtragbereich (A).

2. Fügeelement nach Anspruch 1, **dadurch gekennzeichnet, dass** das Abtragprofil (20, 56, 72, 102, 134) in einem Bereich des Schafts (17) liegt, dessen Durchmesser wenigstens 80% des maximalen Schaftaußendurchmessers (D_{Max}) beträgt.

3. Fügeelement nach einem der vorangehenden Ansprüche, **dadurch gekennzeichnet, dass** das Lochformelement (18, 54, 90, 106) an seiner Spitze (38) einen Durchmesser von maximal 25% des maximalen Schaftdurchmessers (D_{Max}) aufweist.

4. Fügeelement nach Anspruch 3, **dadurch gekennzeichnet, dass** die Spitze eine Stirnfläche aufweist, die im Bereich der Fügeelementachse (MA) eine Vertiefung aufweist.

5. Fügeelement nach einem der vorangehenden Ansprüche, **dadurch gekennzeichnet, dass** das Ende des Lochformelements (18, 54, 90, 106) in Richtung Kopf (12, 52) höchstens 1,3-mal, insbesondere zwischen 0,8-mal und 1,2-mal, den maximalen Schaftaußendurchmesser (D_{Max}) von der Spitze (38) beabstandet ist.

6. Fügeelement nach einem der vorangehenden Ansprüche, **dadurch gekennzeichnet, dass** das Lochformelement (18, 54, 90, 106) im Längsschnitt annähernd ogival verläuft, so dass diese durch den Schnittpunkt zweier Kreise mit dem Radius R von 0,6 * D_{Spitze/Schaft} <= R <= 2,5 * D_{Spitze/Schaft} gebildet wird, deren Mittelpunkte 2R- D_{Spitze/Schaft} voneinander beabstandet sind.

7. Fügeelement nach einem der vorangehenden Ansprüche, **dadurch gekennzeichnet, dass** der Außendurchmesser über den Abtragbereich (A) konstant ist.

8. Fügeelement nach einem der vorangehenden Ansprüche, **dadurch gekennzeichnet, dass** sich der Außendurchmesser im Übergang vom Abtragbereich (A) zum Haltebereich (H) vergrößert.

9. Fügeelement nach einem der vorangehenden Ansprüche, **dadurch gekennzeichnet, dass** sich der Haltebereich (H) vom kopfseitigen Beginn des Abtragprofils (20, 56, 72, 102, 134) in Richtung der Kopfauflagefläche (16) erstreckt und 2 mm bis 6 mm von der Kopfauflagefläche (16, 140) beabstandet ist.

10. Fügeelement nach einem der vorangehenden Ansprüche, **dadurch gekennzeichnet, dass** sich der Außendurchmesser des Haltebereichs (146) in Richtung des Kopfes (142) vergrößert.

11. Fügeelement nach einem der vorangehenden Ansprüche, **dadurch gekennzeichnet, dass** der Zwischenraum (A,B) zwischen zwei benachbarten Haltestrukturen in Richtung des Kopfes größer wird.

12. Bauteilverbund (30, 80) umfassend wenigstens zwei übereinanderliegende Bauteillagen (32, 34; 60, 62; 82, 84; 110,112), die über ein Fügeelement (10, 50, 70, 100, 130) ,gemäß einem der vorangehenden Ansprüche verbunden sind, **dadurch gekennzeichnet, dass** der Abtragbereich (A) unterhalb der untersten Bauteillage - Basislage (34, 62, 84,112) - liegt, und abgetragenes Material (114) der obersten Bauteillage - Decklage (32, 60, 82, 110) - in den Vertiefungen des Abtragprofils (20, 56, 74) aufgenommen ist.

13. Bauteilverbund nach Anspruch 12 **dadurch gekennzeichnet, dass** eine partielle Schweißverbindung aufgrund der Reibungsenergie und Druck zwischen wenigstens einer Basislage (34, 62, 84,112) und dem Fügeelement (10, 50, 70, 100, 130) gebildet ist.

14. Bauteilverbund nach einem der vorangehenden Ansprüche 12 oder 13, **dadurch gekennzeichnet, dass** die Basislage (34, 62, 84,112) Leichtmetall oder Stahl umfasst und / oder
dass die Decklage (32, 60, 82, 110) aus Faserverbund-Kunststoff oder Leichtmetall oder Stahl ist.

15. Verfahren zur Herstellung einer Bauteilverbindung (30, 80, 130) aus wenigstens zwei Bauteillagen über ein Fügeelement (10, 50, 70, 100, 130), das einen Kopf (12, 52) aufweist, der eine Kopfauflagefläche (16, 140) zur Anlage an einer Bauteillage und wenigstens ein Antriebsmerkmal (14) aufweist, über das das Fügeelement (10, 50, 70, 100, 130) in Rotation versetzt werden kann, wobei das Fügeelement (10, 50, 70, 100, 130) einen Schaft (17) aufweist, der über ein Lochformelement (18, 54, 90, 106) in einer Spitze (38,) endet, wobei die Länge des Schaftes (17) ausgehend von der Kopfauflagefläche (16) bis zur Spitze (38) kleiner ist als der fünffache maximale Schaftaußendurchmesser (D_{Max}), wobei der Schaft (17) einen Haltebereich (H) zur Verbindung mit der Bauteillage aufweist, wobei sich am Schaft (17) anschließend zum Haltebereich (H) in Richtung Spitze (38) ein Abtragbereich (A), der ein Abtragprofil (20, 56, 72, 102, 134) aufweist, erstreckt, und dass der Abtragbereich (A) im Abstand von mindestens dem einfachen maximalen Schaftaußendurchmesser (D_{Max}) von der Kopfauflagefläche (16, 140) beabstandet beginnt, wobei das Fügeelement (10, 50, 70, 100, 130) unter Rotation und Druck die Bauteillagen durchdringt, **dadurch gekennzeichnet, dass** von dem Fügeelement (10, 50, 70, 100, 130) an der wenigstens einen oberen Bauteillage - Decklage (32, 60, 82, 110) - ein Materialabtrag (114) erzeugt wird und im Abtragprofil (20, 56, 72, 102, 134) des Fügeelements (10, 50, 70, 100, 130) durch die untere Bauteillage - Basislage (34, 62, 84,112) - hindurch mitgenommen wird.

16. Verfahren nach Anspruch 15, **dadurch gekennzeichnet, dass** zwischen dem Fügeelement (10, 50, 70, 100, 130) und der Basislage (34, 62, 84,112) eine partielle stoffschlüssige Verbindung erzeugt wird.

17. Verfahren nach Anspruch 15 oder 16, **dadurch gekennzeichnet, dass** das Fügeelement (10, 50, 70, 100, 130) nach Aufsetzen auf die Decklage (32, 60, 82, 110) in einer Eindrehrichtung bei einer Drehzahl von 5000 1 /min bis 10000 1/min gedreht wird und mit einer axialen Anpresskraft von 2 kN bis 5 kN beaufschlagt wird.

18. Verfahren nach einem der vorangehenden Ansprüche 15 bis 17, **dadurch gekennzeichnet, dass** in einem ersten Schritt eine erste Drehzahl und eine erste Anpresskraft verwendet werden, bis der Haltebereich vollständig in die Decklage (32, 60, 82, 110) eingedrungen ist, wobei dann in einem zweiten Schritt eine höhere Drehzahl als die erste Drehzahl und eine geringere Anpresskraft als die erste Anpresskraft verwendet wird.

19. Verfahren nach Anspruch 18, **dadurch gekennzeichnet, dass** in einem ersten Schritt in einer Eindrehrichtung mit 3000 1/min und 5000 1/min bei einer Anpresskraft von 2 kN bis 3 kN und im zweiten Schritt eine Drehzahl von 7000 1/min bis 10.000/min verwendet wird.

20. Verfahren nach einem der Ansprüche 15 bis 19, **dadurch gekennzeichnet, dass** ein Fügeelement gemäß einem der Ansprüche 1 bis 11verwendet wird.

## Claims

1. Joining element (10, 50, 70, 100, 130) for connecting to at least one component layer (34, 62, 84, 112), comprising a head (12, 52) having a head contact surface (16, 140) for bearing against a component layer, and at least one drive feature (14), which can be used to rotate the joining element (10, 50, 70, 100, 130), as well as a shank (17) that terminates in a tip (38) via a hole-forming element (18, 54, 90, 106), with the length of the shank (17) from the head contact surface (16) to the tip (38) being less than five times the maximum shank outer diameter (D_{Max}), with the shank (17) comprising a retention area (H) for connection to the component layer, wherein a cutting region (A), which has a cutting profile (20, 56, 72, 102, 134), extends along the shank (17) adjacent to the retention area toward the tip, and wherein the cutting area (A) begins at a distance of at least the single maximum shank outer diameter (D_{Max}) from the head contact surface (16, 140), wherein the retention area (H) comprises a threaded retention structure (76, 104, 132) in a first direction of pitch, **characterized in that** the cutting profile (74, 102, 132) is thread-like and has a direction of pitch opposite to the direction of pitch of the retention structure (76, 104, 134), and has a pitch of between 0.3 mm and 2 mm, wherein the hole-forming element (18, 54, 90, 106), in the region where it transitions into the cutting profile (20, 56, 72, 102, 134), has a core diameter that is greater than the core diameter in the cutting area (A).

2. Joining element according to claim 1, **characterized in that** the cutting profile (20, 56, 72, 102, 134) is located in a region of the shank (17) whose diameter is at least 80% of the maximum shank outer diameter (D_{Max}).

3. Joining element according to any one of the preceding claims, **characterized in that**, at its tip (38), the hole-forming element (18, 54, 90, 106) has a diameter of no more than 25% of the maximum shank diameter (D_{Max}).

4. Joining element according to claim 3, **characterized in that** the tip has a front surface that features a recess in the region of the joining element axis (MA).

5. Joining element according to any one of the preceding claims, **characterized in that** the end of the hole-forming element (18, 54, 90, 106) towards the head (12, 52) is spaced from the tip (38) by at most 1.3 times, in particular between 0.8 times and 1.2 times, the maximum shank outer diameter (D_{Max}).

6. Joining element according to any one of the preceding claims, **characterized in that** the hole-forming element (18, 54, 90, 106) is approximately ogival in shape in longitudinal section, such that it is formed by the intersection of two circles of a radius R, where R is 0.6 * D_{tip/shank} ≤ R ≤ 2.5 * D_{tip/shank}, with the centers of the circles being spaced apart by a distance of 2R - D_{tip/shank}.

7. Joining element according to any one of the preceding claims, **characterized in that** the outer diameter remains constant across the cutting area (A).

8. Joining element according to any one of the preceding claims, **characterized in that** the outer diameter increases in the transition from the cutting area (A) to the retention area (H).

9. Joining element according to any one of the preceding claims, **characterized in that** the retention area (H) extends from the head-side beginning of the cutting profile (20, 56, 72, 102, 134) toward the head contact surface (16) and is spaced between 2 mm and 6 mm from the head contact surface (16, 140).

10. Joining element according to any one of the preceding claims, **characterized in that** the outer diameter of the retention area (146) increases toward the head (142).

11. Joining element according to any one of the preceding claims, **characterized in that** the space (A, B) between two adjacent retention structures becomes larger toward the head.

12. Composite component (30, 80) comprising at least two component layers (32, 34; 60, 62; 82, 84; 110, 112) stacked on top of each other which are connected to one another via a joining element (10, 50, 70, 100, 130) of the type specified in any one of the preceding claims, **characterized in that** the cutting area (A) is located below the lowermost component layer - the base layer (34, 62, 84, 112), and that the material (114) removed from the uppermost component layer - the top layer (32, 60, 82, 110) - is collected in the recesses of the cutting profile (20, 56, 74).

13. Composite component according to claim 12, **characterized in that** a partial welded connection is formed due to frictional energy and pressure between at least one base layer (34, 62, 84, 112) and the joining element (10, 50, 70, 100, 130).

14. Composite component according to any one of claims 12 or 13 above, **characterized in that** the base layer (34, 62, 84, 112) comprises light metal or steel and/or that the top layer (32, 60, 82, 110) is made of fiber-reinforced plastic, light metal, or steel.

15. Method for manufacturing a component joint (30, 80, 130) from at least two component layers using a joining element (10, 50, 70, 100, 130) that has a head (12, 52) comprising a head contact surface (16, 140) for engaging a component layer and at least one drive feature (14) which can be used to rotate the joining element (10, 50, 70, 100, 130), wherein the joining element (10, 50, 70, 100, 130) comprises a shank (17) that extends via a hole-forming element (18, 54, 90, 106) into a tip (38), wherein the length of the shank (17) from the head support surface (16) to the tip (38) is less than five times the maximum shank outer diameter (D_{Max}), wherein the shank (17) has a retention region (H) for connection to the component layer, wherein a cutting region (A), which has a cutting profile (20, 56, 72, 102, 134), extends along the shank (17) adjacent to the retention area toward the tip, and wherein the cutting region (A) begins at a distance of at least the single maximum shank outer diameter (D_{Max}) from the head contact surface (16, 140), wherein the joining element (10, 50, 70, 100, 130) penetrates the component layers under rotation and pressure, **characterized in that** the joining element (10, 50, 70, 100, 130) results in material (114) being removed from the at least one upper component layer - the top layer (32, 60, 82, 110) - which removed material (1114) is carried along through the lower component layer - the base layer (34, 62, 84, 112) - within the cutting profile (20, 56, 72, 102, 134) of the joining element (10, 50, 70, 100, 130).

16. Method according to claim 15, **characterized in that** a partial material-to-material connection is obtained between the joining element (10, 50, 70, 100, 130) and the base layer (34, 62, 84, 112).

17. Method according to any one of claims 15 or 16 above, **characterized in that**, when placed on the top layer (32, 60, 82, 110), the joining element (10, 50, 70, 100, 130) is rotated in one direction at a speed of between 5,000 rpm and 10,000 rpm, and is subjected to an axial clamping force of between 2 kN and 5 kN.

18. Method according to any one of claims 15 through 17 above, **characterized in that**, in a first step thereof, a first speed and a first clamping force are used until the retention area has fully penetrated the top layer (32, 60, 82, 110), whereupon, in a second step thereof, a speed higher than the first speed and a clamping force lower than the first clamping force are used.

19. Method according to claim 18, **characterized in that**, in a first step thereof, in a screw-in direction, a speed of between 3,000 rpm and 5,000 rpm and a clamping force of between 2 kN and 3 kN are used, and, in a second step thereof, a speed of between 7,000 rpm and 10,000 rpm is used.

20. Method according to any one of claims 15 through 19 above, **characterized in that** the method uses a joining element as specified in any one of claims 1 through 11 above.

## Revendications

1. Elément d'assemblage (10, 50, 70, 100, 130) destiné à être relié à au moins une couche de composant (34, 62, 84, 112) comprenant une tête (12, 52), présentant une surface d'appui de tête (16, 140) destinée à venir en appui sur une couche de composant et au moins une caractéristique d'entraînement (14), par l'intermédiaire de laquelle l'élément d'assemblage (10, 50, 70, 100, 130) peut être amené en rotation, ainsi qu'une tige (17), qui se termine par une pointe (38) via un élément de formation de trou (18, 54, 90, 106), dans lequel la longueur de la tige (17), de la surface d'appui de tête (16) à la pointe (38), est inférieure à cinq fois le diamètre extérieur de tige maximal (D_{Max}), dans lequel la tige (17) présente une zone de retenue (H) destinée à être reliée à la couche de composant, dans lequel une zone d'ablation (A), qui présente un profil d'ablation (20, 56, 72, 102, 134), s'étend sur la tige (17) après la zone de retenue (H) en direction de la pointe (38), et que la zone d'ablation (A) commence en étant espacée de la surface d'appui de tête (16, 140) à la distance d'au moins le simple diamètre extérieur de tige maximal (D_{Max}), dans lequel la zone de retenue (H) présente une structure de retenue (76, 104, 132) du type filetage dans une première direction de pas, **caractérisé en ce que** le profil d'ablation (74, 102, 132) s'étend à la façon d'un filetage et présente une direction de pas opposée à la direction de pas de la structure de retenue (76, 104, 134) et présente un pas compris entre 0,3 mm et 2 mm, dans lequel l'élément de formation de trou (18, 54, 90, 106) présente dans la zone dans laquelle il passe dans le profil d'ablation (20, 56, 72, 102, 134) un diamètre du noyau qui est plus grand que le diamètre du noyau dans la zone d'ablation (A).

2. Elément d'assemblage selon la revendication 1, **caractérisé en ce que** le profil d'ablation (20, 56, 72, 102, 134) se situe dans une zone de la tige (17), dont le diamètre est égal à au moins 80 % du diamètre extérieur de tige maximal (D_{Max}).

3. Elément d'assemblage selon l'une quelconque des revendications précédentes, **caractérisé en ce que** l'élément de formation de trou (18, 54, 90, 106) présente sur sa pointe (38) un diamètre de maximum 25 % du diamètre de tige maximal (D_{Max}).

4. Elément d'assemblage selon la revendication 3, **caractérisé en ce que** la pointe présente une face frontale qui présente un évidement dans la zone de l'axe d'élément d'assemblage (MA).

5. Elément d'assemblage selon l'une quelconque des revendications précédentes, **caractérisé en ce que** l'extrémité de l'élément de formation de trou (18, 54, 90, 106) en direction de la tête (12, 52) est espacée de la pointe (38) tout au plus de 1,3 fois, en particulier entre 0,8 fois et 1,2 fois, du diamètre extérieur de tige maximal (D_{Max}).

6. Elément d'assemblage selon l'une quelconque des revendications précédentes, **caractérisé en ce que** l'élément de formation de trou (18, 54, 90, 106) s'étend à peu près de manière ogivale en coupe longitudinale, de sorte que celui-ci est formé par le point d'intersection de deux cercles ayant le rayon R de 0,6 * Dₚₒᵢₙₜₑ/_{tige} <= R <= 2,5 * Dₚₒᵢₙₜₑ/_{tige}, dont les centres sont espacés les uns des autres par 2R-Dₚₒᵢₙₜₑ/_{tige}.

7. Elément d'assemblage selon l'une quelconque des revendications précédentes, **caractérisé en ce que** le diamètre extérieur est constant sur toute l'étendue de la zone d'ablation (A).

8. Elément d'assemblage selon l'une quelconque des revendications précédentes, **caractérisé en ce que** le diamètre extérieur augmente dans la transition de la zone d'ablation (A) à la zone de retenue (H).

9. Elément d'assemblage selon l'une quelconque des revendications précédentes, **caractérisé en ce que** la zone de retenue (H) s'étend à partir du début côté tête du profil d'ablation (20, 56, 72, 102, 134) en direction de la surface d'appui de tête (16) et est espacée de 2 mm à 6 mm de la surface d'appui de tête (16, 140).

10. Elément d'assemblage selon l'une quelconque des revendications précédentes, **caractérisé en ce que** le diamètre extérieur de la zone de retenue (146) augmente en direction de la tête (142).

11. Elément d'assemblage selon l'une quelconque des revendications précédentes, **caractérisé en ce que** l'espace intermédiaire (A, B) entre deux structures de retenue adjacentes augmente en direction de la tête.

12. Ensemble de composants (30, 80) comprenant au moins deux couches de composant (32, 34 ; 60, 62 ; 82, 84 ; 110, 112) superposées, qui sont reliées par l'intermédiaire d'un élément d'assemblage (10, 50, 70, 100, 130) selon l'une quelconque des revendications précédentes, **caractérisé en ce que** la zone d'ablation (A) se situe au-dessous de la couche de composant la plus basse - couche de base (34, 62, 84, 112) -, et le matériau (114) enlevé de la couche de composant la plus haute - couche de couverture (32, 60, 82, 110) - est reçu dans les évidements du profil d'ablation (20, 56, 74).

13. Ensemble de composants selon la revendication 12 **caractérisé en ce qu'**une liaison soudée partielle est formée entre au moins une couche de base (34, 62, 84, 112) et l'élément d'assemblage (10, 50, 70, 100, 130) en raison de l'énergie de frottement et de la pression.

14. Ensemble de composants selon l'une quelconque des revendications précédentes 12 ou 13, **caractérisé en ce que** la couche de base (34, 62, 84, 112) comprend du métal léger ou de l'acier et/ou que la couche de couverture (32, 60, 82, 110) est en matière plastique renforcée par des fibres ou en métal léger ou en acier.

15. Procédé de fabrication d'une liaison de composants (30, 80, 130) à partir d'au moins deux couches de composant par l'intermédiaire d'un élément d'assemblage (10, 50, 70, 100, 130), qui présente une tête (12, 52) qui présente une surface d'appui de tête (16, 140) destinée à être en appui sur une couche de composant et présente au moins une caractéristique d'entraînement (14) par l'intermédiaire de laquelle l'élément d'assemblage (10, 50, 70, 100, 130) peut être amené en rotation, dans lequel l'élément d'assemblage (10, 50, 70, 100, 130) présente une tige (17), qui se termine par une pointe (38) via un élément de formation de trou (18, 54, 90, 106), dans lequel la longueur de la tige (17), de la surface d'appui de tête (16) à la pointe (38), est inférieure à cinq fois le diamètre extérieur de tige maximal (D_{Max}), dans lequel la tige (17) présente une zone de retenue (H) destinée à être reliée à la couche de composant, dans lequel une zone d'ablation (A), qui présente un profil d'ablation (20, 56, 72, 102, 134), s'étend sur la tige (17) après la zone de retenue (H) en direction de la pointe (38), et que la zone d'ablation (A) commence en étant espacée de la surface d'appui de tête (16, 140) à la distance d'au moins le simple diamètre extérieur de tige maximal (D_{Max}), dans lequel l'élément d'assemblage (10, 50, 70, 100, 130) sous l'effet d'une rotation et d'une pression traverse les couches de composant, **caractérisé en ce qu'**une ablation de matériau (114) est produite à partir de l'élément d'assemblage (10, 50, 70, 100, 130) sur l'au moins une couche de composant supérieure - couche de couverture (32, 60, 82, 110) - et le matériau enlevé est entraîné dans le profil d'ablation (20, 56, 72, 102, 134) de l'élément d'assemblage (10, 50, 70, 100, 130) d'un bout à l'autre de la couche de composant inférieure - couche de base (34, 62, 84, 112).

16. Procédé selon la revendication 15, **caractérisé en ce qu'**une liaison de matière partielle est produite entre l'élément d'assemblage (10, 50, 70, 100, 130) et la couche de base (34, 62, 84, 112).

17. Procédé selon la revendication 15 ou 16, **caractérisé en ce que** l'élément d'assemblage (10, 50, 70, 100, 130) une fois mis en place sur la couche de couverture (32, 60, 82, 110) est amené en rotation dans une direction de vissage à une vitesse de rotation de 5000 1/min à 10 000 1/min et est sollicité avec une force de pression axiale de 2 kN à 5 kN.

18. Procédé selon l'une quelconque des revendications précédentes 15 à 17, **caractérisé en ce que** dans une première étape une première vitesse de rotation et une première force de pression sont utilisées, jusqu'à ce que la zone de retenue ait entièrement pénétré dans la couche de couverture (32, 60, 82, 110), dans lequel dans une deuxième étape une vitesse de rotation supérieure à la première vitesse de rotation et une force de pression inférieure à la force de pression sont ensuite utilisées.

19. Procédé selon la revendication 18, **caractérisé en ce que** dans une première étape une vitesse de rotation à 3000 1/min et 5000 1/min pour une force de pression de 2 kN à 3 kN est utilisée et dans la deuxième étape une vitesse de rotation de 7000 1/min à 10 000 1/min est utilisée dans une direction de vissage.

20. Procédé selon l'une quelconque des revendications 15 à 19, **caractérisé en ce qu'**un élément d'assemblage selon l'une quelconque des revendications 1 à 11 est utilisé.
